(19) Europäisches Patentamt
European Patent Office
Office européen des brevets

(11) **EP 2 930 926 A1**

(12) **EUROPÄISCHE PATENTANMELDUNG**

(43) Veröffentlichungstag:
**14.10.2015 Patentblatt 2015/42**

(51) Int Cl.:
**H04N 7/15** *(2006.01)*

(21) Anmeldenummer: **15000585.8**

(22) Anmeldetag: **02.03.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **20.03.2014 DE 102014004069**

(71) Anmelder: **Unify GmbH & Co. KG**
**81379 München (DE)**

(72) Erfinder:
• **Kleiner, Patrick**
**81476 München (DE)**
• **Klug, Karl**
**83714 Miesbach (DE)**
• **Unterstaller, Martha**
**81477 München (DE)**
• **Stephan, Luzia**
**85232 Bergkirchen (DE)**

(74) Vertreter: **Fritzsche, Thomas**
**Fritzsche Patent**
**Naupliastraße 110**
**81545 München (DE)**

(54) **Verfahren, Softwareprodukt und Vorrichtung zur Steuerung einer Konferenz**

(57) Die Erfindung betrifft ein Verfahren zur Steuerung einer Konferenz. Das Verfahren weist die Schritte auf:

a) Berechnen jeweiliger virtueller Abbildungen einer Mehrzahl von kommunikationstechnisch verbundenen Konferenzumgebungen (100) mit jeweils einem oder mehreren darin befindlichen Teilnehmer/-n;

b) Berechnen einer an eine betreffende der Konferenzumgebungen (100) angepasste Summendarstellung unter Verwendung der virtuellen Abbildungen aller Konferenzumgebungen (100);

c) Bereitstellen der Summendarstellung an alle Teilnehmer der betreffenden Konferenzumgebung (100);

d) Berechnen einer an einen individuellen der Teilnehmer angepassten Individualdarstellung unter Verwendung der Summendarstellung der Konferenzumgebung, welcher der individuelle Teilnehmer angehört; und

e) Bereitstellen der Individualdarstellung an den individuellen Teilnehmer gleichzeitig mit der Bereitstellung der Summendarstellung gemäß Schritt c).

Die Erfindung betrifft ferner ein Softwareprodukt, das auf einem durch einen Computer lesbaren Medium gespeichert ist und das vorzugsweise direkt in den internen Speicher eines Computers geladen werden kann und das Programmcodes zur Durchführung der Verfahrensschritte des beschriebenen Verfahrens, wenn das Computerprogramm auf dem Computer ausgeführt wird, aufweist, und eine Vorrichtung zur Ausführung des Verfahrens.

Fig. 1

**Beschreibung**

Die Erfindung betrifft ein Verfahren, ein Softwareprodukt und eine Vorrichtung zur Steuerung einer Konferenz, insbesondere einer virtuellen Konferenz.

Konferenzen werden oft als Videokonferenz durchgeführt. Die Konferenzteilnehmer können an beliebigen Orten auf der Welt an der Konferenz teilnehmen. Beispielsweise sitzen einige der Gesprächspartner zusammen in einem Raum, andere aber allein am Arbeitsplatz oder im Home Office. Bei einer realen Konferenz, in der alle Teilnehmer zusammen in einem Raum sitzen, ist jeder Teilnehmer in der Lage, sich einzelnen Teilnehmern individuell zuzuwenden und z. B. aus deren Mimik und Reaktion, ihrem Verhalten und ihren Emotionen genauere Rückschlüsse zu ziehen und das eigene Verhalten daran anzupassen. Bei einer Videokonferenz erhalten alle Teilnehmer die gleiche, vom Konferenzserver erstellte Sicht, die eine Summenansicht aller Teilnehmer ist. Einstellungen einzelner Teilnehmer (z. B. Ausrichtung der Kamera, Zoom) beeinflussen die Darstellung für alle Teilnehmer. Eine individuelle "Beobachtung" einzelner Teilnehmer ist nicht möglich.

Es ist bekannt, die Darstellung einer Videokonferenz derart zu beeinflussen, dass eine Kamera von einem entfernten Ende der Konferenz aus fallweise gesteuert wird. Dies hat aber Auswirkungen für alle Konferenzteilnehmer und verschafft auch keine individuelle Sicht, sondern beeinflusst nur die Summenansicht. Zudem kann ein dauerndes Neujustieren der Kamera(s) eine "Nervosität" in die Konferenz bringen, die nicht erwünscht ist.

Es ist eine Aufgabe der vorliegenden Erfindung, ein Verfahren und eine Vorrichtung zur Kommunikationssteuerung in Konferenzen anzugeben, die in der Lage sind, die vorstehend genannten Nachteile im Stand der Technik wenigstens teilweise zu überwinden. Insbesondere besteht eine Aufgabe der vorliegenden Erfindung darin, ein Verfahren und eine Vorrichtung zur Kommunikationssteuerung in Konferenzen anzugeben, die in der Lage sind, die individuellen Beobachtungsmöglichkeiten eines Konferenzteilnehmers zu verbessern und ihm vorzugsweise eine private Sichtweise auf einzelne bzw. ausgewählte Teilnehmer zu verschaffen.

Die Aufgabe wird erfindungsgemäß wenigstens in Teilaspekten durch die Merkmale der unabhängigen Ansprüche gelöst. Vorteilhafte Ausführungsformen und Weiterentwicklungen der Erfindung sind in den Unteransprüchen angegeben.

Gemäß einem Gesichtspunkt der Erfindung wird ein Verfahren zur Steuerung einer virtuellen Konferenz vorgeschlagen, wobei das Verfahren die Schritte aufweist:

a) Berechnen jeweiliger virtueller Abbildungen einer Mehrzahl von kommunikationstechnisch verbundenen Konferenzumgebungen mit jeweils einem oder mehreren darin befindlichen Teilnehmer/-n;
b) Berechnen einer an eine betreffende der Konferenzumgebungen angepasste Summendarstellung unter Verwendung der virtuellen Abbildungen aller Konferenzumgebungen;
c) Bereitstellen der Summendarstellung an alle Teilnehmer der betreffenden Konferenzumgebung,
d) Berechnen einer an einen individuellen der Teilnehmer angepassten Individualdarstellung unter Verwendung der Summendarstellung der betreffenden Konferenzumgebung, welcher der individuelle Teilnehmer angehört, und
e) Bereitstellen der Individualdarstellung an den individuellen Teilnehmer gleichzeitig mit der Bereitstellung der Summendarstellung gemäß Schritt c).

Eine virtuelle Konferenz ist im Sinne der Erfindung ein Kommunikationsereignis zwischen mehreren, vorzugsweise mehr als zwei Teilnehmern, unter Austausch von wenigstens Audio- und Video-Daten, wobei der Datenaustausch durch elektronische Mittel der Kommunikation, vorzugsweise über ein paketbasiertes Protokoll wie etwa TCP/IP oder dergleichen, erfolgt. Dabei wird typischerweise eine Videoinformation jeder Konferenzumgebung mittels einer oder mehrerer Kameras aufgezeichnet und eine Audioinformation jeder Konferenzumgebung mittels einer oder mehrerer Mikrofone aufgezeichnet. Sofern eine Videoinformation nicht bereitgestellt werden kann, etwa weil die betreffende Konferenzumgebung ein Mobiltelefon oder dergleichen ist oder aus anderen Gründen keine Kamera vorhanden ist, kann der betreffende Teilnehmer in der Summendarstellung als Avatar, Ersatzbild, Standbild oder Symbol dargestellt werden. Unter einer virtuellen Abbildungen wird im Sinne der Erfindung eine visuelle und/oder auditive, vorzugsweise audiovisuelle, insbesondere räumliche Darstellung einer Konferenzumgebung aus der betreffenden Video- und/oder Audioinformation verstanden. Idealerweise, aber nicht zwingend, ist hierzu jedem Teilnehmer in einer Konferenzumgebung wenigstens eine Kamera und wenigstens ein Mikrofon zugeordnet, sodass von jedem Teilnehmer eine individuelle Video- und Audioinformation existiert, die bei der Erzeugung der virtuellen Abbildung eine Trennung der Teilnehmer ermöglicht. Alternativ kann z. B. über eine raumfest installierte Kamera- und/oder Mikrofonanordnung und eine geeignete Bilderkennung eine virtuelle Abbildung mit einer realistischen räumlichen Zuordnung der Teilnehmer ermöglicht werden. Eine Summendarstellung ist im Sinne der Erfindung eine virtuelle Anordnung aller (erkannter) Teilnehmer aller Konferenzumgebungen in einem virtuellen Konferenzraum. Die Summendarstellung ist an die jeweilige Konferenzumgebung angepasst, d. h., die Anordnung der Konferenzteilnehmer in dem jeweiligen virtuellen Konferenzraum ist an die Verhältnisse der tatsächlichen Konferenzumgebung angepasst. So können beispielsweise der oder die Teilnehmer der betreffenden Konferenzumgebung im Zentrum des virtuellen Konferenzraums (der Summendarstellung) entsprechend ihrer tatsächlichen Verteilung angeordnet werden, während die Teilnehmer anderer Konferenzumgebungen um diese herum angeordnet werden. Die Anordnung der Teilnehmer in dem jeweiligen virtuellen Konferenzraum betrifft je nach Wiedergabemöglichkeiten der betreffenden Konferenzumgebung den visuellen als auch den auditiven bzw. akustischen Raum, sodass für die Teilnehmer - wiederum je nach Wiedergabemöglichkeiten der betreffenden Konferenzumgebung - jeweils eine in Bezug auf visuelle und auditive Sinneseindrücke möglichst widerspruchsfreie virtuelle Realität geschaffen werden kann. Das Bereitstellen der Summendarstellung beinhaltet im Sinne der Erfindung eine Übermittlung der audiovisuellen Daten, die der Summendarstellung entsprechen, an eine lokale Konferenzeinheit der betreffenden Konferenzumgebung. Die Wiedergabe der Summendarstellung erfolgt beispielsweise auf einer geeigneten Oberfläche auf einem individuellen Endgerät jedes Teilnehmers, kann aber auch auf einer raumfest installierte Bildschirm- oder Projektionseinrichtung der jeweiligen Konferenzumgebung, die für alle dort befindlichen Teilnehmer einsehbar ist, erfolgen. Die Individualdarstellung kann auch eine Summendarstellung sein, die aber gemäß Schritt d) des erfindungsgemäßen Verfahrens an einen individuellen der Teilnehmer angepasst ist. Mit anderen Worten, die Individualdarstellung unterscheidet sich im Allgemeinen von der Summendarstellung. Die Individualdarstellung kann auf Anforderung des individuellen Teilnehmers oder aufgrund von vorab bekannten Präferenzen des individuellen Teilnehmers berechnet werden.

Mit anderen Worten, durch das erfindungsgemäße Verfahren werden virtuelle Räume auf drei Ebenen geschaffen: eine erste Ebene umfasst die virtuellen Abbildungen jeder Konferenzumgebung als (möglichst realistische) Umsetzung der tatsächlichen Verhältnisse in einen Rechenraum, eine zweite Ebene fasst alle verbundenen Konferenzumgebungen zusammen und schafft für jede Konferenzumgebung einen für alle Teilnehmer dieser betreffenden Konferenzumgebung gemeinsamen virtuellen Raum aller Teilnehmer aller Konferenzumgebungen (ggf. unter Abzug der Teilnehmer der betreffenden Konferenzumgebung, für welche die Summendarstellung geschaffen wird), und eine dritte Ebene ermöglicht die Schaffung eines individuellen virtuellen Raums für jeden der Teilnehmer, wobei die Darstellungen der zweiten und dritten Ebene den Teilnehmern gleichzeitig zur Verfügung gestellt werden (die dritte nur dem individuellen Teilnehmer, für den sie geschaffen wird). Die virtuellen Abbildungen, Summendarstellungen und Individualdarstellungen, mit anderen Worten, die virtuellen Räume, sind zunächst als Datenkonstrukte zu verstehen, die durch Wiedergabe mittels eines geeigneten Geräts wahrnehmbar werden, aber auch ohne Wiedergabegerät grundsätzlich in einem Datenraum existieren. Die Verwendung des Singular in Bezug auf die betreffende Konferenzumgebung, die Summendarstellung, den individuellen Teilnehmer, und die Individualdarstellung umfasst jeweils auch die Anwendung auf mehrere betreffende Konferenzumgebungen und die Erzeugung mehrerer entsprechender Summendarstellungen, sowie auf mehrere individuelle Teilnehmer einer Konferenzumgebung und die Erzeugung mehrerer entsprechender Individualdarstellungen. Durch das erfindungsgemäße Verfahren wird eine neue virtuelle Gesamtansicht einer Konferenz geschaffen, die an die Möglichkeiten einer realen Konferenz, bei der alle Teilnehmer im gleichen Raum sitzen, anknüpft. Die individuellen Beobachtungsmöglichkeiten eines Konferenzteilnehmers werden verbessert und ihm wird eine private Sichtweise auf einzelne bzw. ausgewählte Teilnehmer verschafft. Die Konferenzeinheit bzw. der Konferenzserver steuert somit nicht nur die gemeinsame Sicht der Konferenz hinsichtlich Video und/oder Audio, sondern stellt auch eine eigene logische Einheit für jeden Teilnehmer/Konferenzraum zur Verfügung. Diese individuelle logische Einheit kann individuell angesteuert werden: zoomen, Personen auswählen etc. Jeder Teilnehmer der Konferenz bekommt eine private Sicht eines virtuellen Konferenzraums zur Verfügung gestellt.

Die Schritte a) bis e) des erfindungsgemäßen Verfahrens können durch eine zentrale Konferenzeinheit, insbesondere einen Konferenzserver, ausgeführt werden. Die zentrale Konferenzeinheit kann auch durch eine lokale Konferenzeinheit einer der Konferenzumgebungen verwirklicht sein, die dann Steuerungsaufgaben auch für die anderen Konferenzumgebungen übernimmt.

Die Schritte b) bis e) können alternativ durch eine lokale Konferenzeinheit, die der betreffenden Konferenzumgebung zugeordnet ist, ausgeführt werden, wobei dem Schritt b) ein Schritt eines Empfangens der virtuellen Abbildungen aller anderen Konferenzumgebungen vorausgehen kann. Die virtuellen Abbildungen können beispielsweise durch einen zentralen Konferenzserver bereitgestellt werden, oder sie können direkt von den einzelnen (anderen) lokalen Konferenzeinheiten empfangen werden.

In einer weiteren Alternative können die Schritte d) und e) durch eine lokale Konferenzeinheit, die der betreffenden Konferenzumgebung zugeordnet ist, ausgeführt werden, wobei dem Schritt d) eine Schritt eines Empfangens der Summendarstellung für die betreffende Konferenzeinheit vorausgehen kann. Die Summendarstellungen können dabei beispielsweise durch einen zentralen Konferenzserver bereitgestellt werden.

Dem Schritt d) kann ein Schritt eines Empfangens und/oder Verarbeitens von individuellen Anforderungen des jeweiligen Teilnehmers vorausgehen. Die individuellen Anforderungen können beispielsweise Voreinstellungen oder eine Echtzeitauswahl des jeweiligen Teilnehmers umfassen, wobei in Schritt d) der Berechnung der Individualdarstellung die individuellen Anforderungen des jeweiligen Teilnehmers zu Grunde gelegt werden. Insbesondere können die Anforderungen wenigstens eine aus der Gruppe umfassen, die aufweist:

• Die räumliche Anordnung der Teilnehmer;

3

- Das Entfernen, Hinzufügen, Vergrößern, Verkleinern eines oder mehrerer Teilnehmer und/oder Objekten;
- Das Platzieren eines oder mehrerer Teilnehmer in einer Separatdarstellung (z.B. Fenster);
- Das Darstellen von Meta- bzw. Zusatzinformationen wie etwa Kontextdaten, Gemütszuständen, persönlichen und/oder beruflichen Beziehungsdaten, private Kontaktdaten zu einem oder mehreren Teilnehmern;
- Das Hervorheben oder Dämpfen einer Hörlautstärke für einzelne Quellen, z.B. Teilnehmer.

Metadaten und Kontextdaten zu dargestellten Teilnehmern können von einem Dienst automatisch ermittelt werden.

In einer Weiterbildung der Erfindung sind die Anforderungen des individuellen Teilnehmers über Spracheingabe vermittelbar. Diese Weiterbildung bietet für einen mobilen Teilnehmer Handhabungsvorteile. Auch ist es möglich, dass die Individualdarstellung auf einem mobilen Endgerät bereitgestellt wird.

In einer bevorzugten Ausführungsform werden in den Summendarstellungen die Teilnehmer in einem virtuellen Raum optisch und/oder akustisch gleich verteilt. Dadurch kann unter Ressourcenschonung eine optimale Zuordnung und Ortbarkeit der Teilnehmer erzielt werden. Die Gleichverteilung wird natürlich durch die Wiedergabemöglichkeiten auf der Seite jeder Konferenzumgebung begrenzt. So kann durch ein einfaches Mobiltelefon eine optische Darstellung gar nicht wiedergegeben und ist eine akustische Darstellung über einen einfachen Lautsprecher auf die Signalsumme begrenzt. Dennoch kann beispielsweise auf Anforderung des Benutzers eines Mobiltelefons das Tonsignal einzelner Teilnehmer hervorgehoben oder gedämpft werden, und in der Summendarstellung kann durch geeignete Filterungsmaßnahmen die Verständlichkeit und Transparenz gesteigert werden. Benutzt der Teilnehmer mit dem mobilen Endgerät ein Headset, kann durch geeignete Verfahren wie etwa Spacial Audio ein räumlicher Eindruck vermittelt werden. Insbesondere ist also das erfindungsgemäße Verfahren auch in einem Audio-Only-Modus einsetzbar und vorteilhaft. Bei Verwendung eines Surround-Sound-Systems in einem Raum kann auch nicht nur die Breite, sondern auch die Tiefe des virtuellen Raums direkt ausgenutzt werden.

Es versteht sich, dass die Erfindung auch durch ein Computerprogramm, umfassend Programmbefehle, die einen Computer dazu veranlassen, die Verfahrensschritte des beschriebenen Verfahrens auszuführen, wenn das Computerprogramm auf den Computer geladen oder von diesem ausgeführt wird, ein Softwareprodukt, das auf einem durch einen Computer lesbaren Medium gespeichert ist und das vorzugsweise direkt in den internen Speicher eines Computer geladen werden kann und das Programmcodes zur Durchführung der Verfahrensschritte des beschriebenen Verfahrens, wenn das Computerprogramm auf dem Computer ausgeführt wird, aufweist, und ein digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des beschriebenen Verfahrens auszuführen, verkörpert sein kann. Dabei kann der Computer durch ein Konferenzsystem, einen Konferenzserver, ein Konferenzendgerät, ein individuelles Endgerät eines Teilnehmers oder dergleichen verkörpert sein.

Gemäß einem weiteren Gesichtspunkt der Erfindung wird eine Vorrichtung mit Mitteln zur Ausführung des Verfahrens vorgeschlagen, wobei das Verfahren nach der vorstehenden Beschreibung ausgebildet ist. Die Aufgabe der vorliegenden Erfindung wird durch diese Vorrichtung aus denselben Gründen gelöst, wie diese weiter oben für das entsprechende Verfahren angegeben wurden. Die Vorrichtung kann beispielsweise ein Konferenzserver oder eine zentrale Konferenzeinheit oder ein Peripheriegerät oder ein Endgerät sein oder aufweisen, d. h., eine Anordnung solcher Geräte zur verteilten Ausführung des Verfahrens sein. Der Begriff "zur Ausführung" ist so zu verstehen, dass die Vorrichtung entsprechend ausgelegt, ausgebildet, angepasst, eingerichtet, programmiert und/oder dergleichen ist.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. Ausführungsbeispiele können miteinander kombiniert werden, und die Kombination kann ebenfalls als Ausführungsbeispiel der Erfindung verstanden werden.

Im Folgenden wird die Erfindung anhand bevorzugter Ausführungsbeispiele und mit Hilfe von Figuren näher beschrieben. Dabei ist bzw. sind

Fig. 1      eine Darstellung eines Konferenzsystems gemäß einem Ausführungsbeispiel der vorliegenden Erfindung;

Fig. 2      eine Darstellung mehrerer Konferenzumgebungen in dem Konferenzsystem von Fig. 1;

Fig. 3      ein Darstellung eines virtuellen akustischen Raums zur Veranschaulichung und Herleitung einer idealen Verteilung von Konferenzteilnehmern;

Fig. 4 eine Darstellung eines virtuellen akustischen Raums einer Konferenzumgebung mit einer nicht idealen Verteilung von Konferenzteilnehmern;

Fign. 5 bis 8 Darstellungen physikalischer und virtueller visueller und akustischer Räume in den Konferenzumgebungen von Fig. 2;

Fig. 9 eine Darstellung virtueller Abbildungen der Konferenzumgebungen von Fig. 2;

Fig. 10 eine Darstellung von Summendarstellungen der Konferenzumgebungen von Fig. 2; und

Fig. 11 eine Darstellung einer Summendarstellung mit Individualansichten für individuelle Teilnehmer.

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

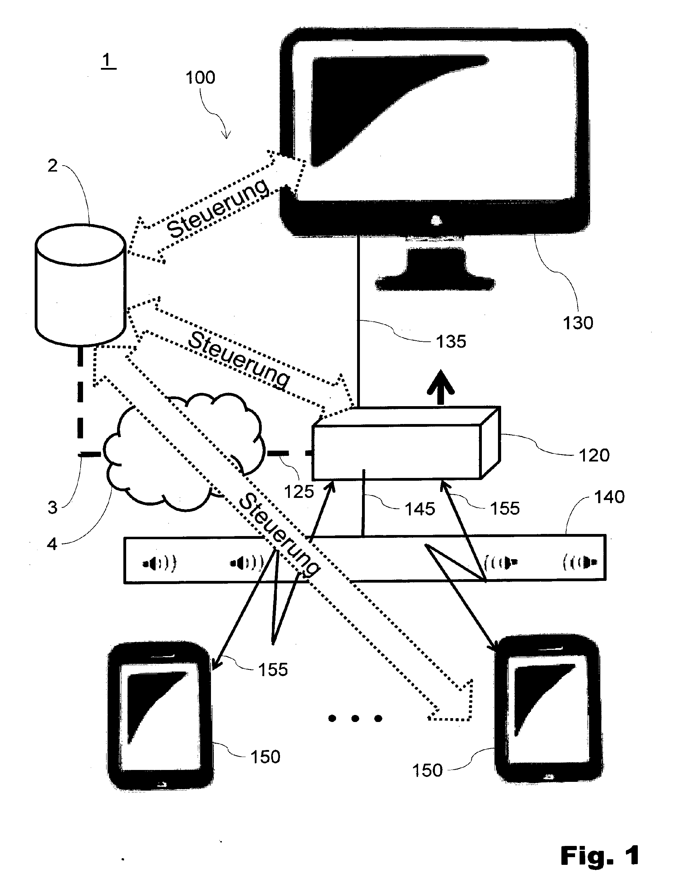

Fig. 1 zeigt eine Darstellung eines Konferenzsystems 1 in Form eines Blockschaubildes.

Das Konferenzsystem 1 weist einen Konferenzserver 2 auf, der über eine Netzwerkverbindung 3 mit einem Intranet 4 verbunden ist. Der Konferenzserver 2 weist Dienste wie etwa einen Backendservice zur Steuerung von Konferenzumgebungen auf. Beispielhaft ist in Fig. 1 eine Konferenzumgebung 100 dargestellt. Die Konferenzumgebung 100 entspricht einer Situation in einem Konferenzraum.

Die Konferenzumgebung 100 weist eine lokale Konferenzeinheit 120 auf, die über eine Netzwerkverbindung 125 mit dem Intranet 4 verbunden ist. Eine Bildwiedergabeeinheit 130 ist über eine Verbindung 135 mit der Konferenzeinheit 120 verbunden. Eine Tonwiedergabeeinheit 140 ist über eine Verbindung 145 mit der Konferenzeinheit 120 verbunden. Mehrere Endgeräte 150, die jeweils einem Teilnehmer (hier nicht näher dargestellt) in der Konferenzumgebung 100 zugeordnet sind, sind über Verbindungen 155 mit der Konferenzeinheit 120 verbunden. Die Verbindungen 135 und 145 der Bild- und Tonwiedergabeeinheiten 130, 140 sind im vorliegenden Beispiel leitungsgebundene Verbindungen, während die Verbindungen 155 der Endgeräte 150 drahtlose Verbindungen sind. Insbesondere sind die Endgeräte 150 mobile Endgeräte, die auch eigene Endgeräte der Teilnehmer sein können. Die Verbindungen 135, 145, 155 können Netzwerkverbindungen sein, die ein separates Netzwerk der Konferenzumgebung 100 bilden oder Teil des Intranets 4 sein können. Andererseits können die Verbindungen 155 der Endgeräte 150 Mobilfunkverbindungen wie etwa GSM, UMTS oder dergleichen oder Nahverkehrsfunkverbindungen wie etwa Bluetooth oder dergleichen sein. Die Erfindung ist auf die Verbindungsart der Bild- und Tonwiedergabeeinheiten 130, 140 und der Endgeräte 150 nicht beschränkt. Wie in Fig. 1 dargestellt, ist der Konferenzserver 2 eingerichtet, Steuerungszugriff auf die lokale Konferenzeinheit 120, die Bildwiedergabeeinheit 130 und die Endgeräte 150 aufzuweisen.

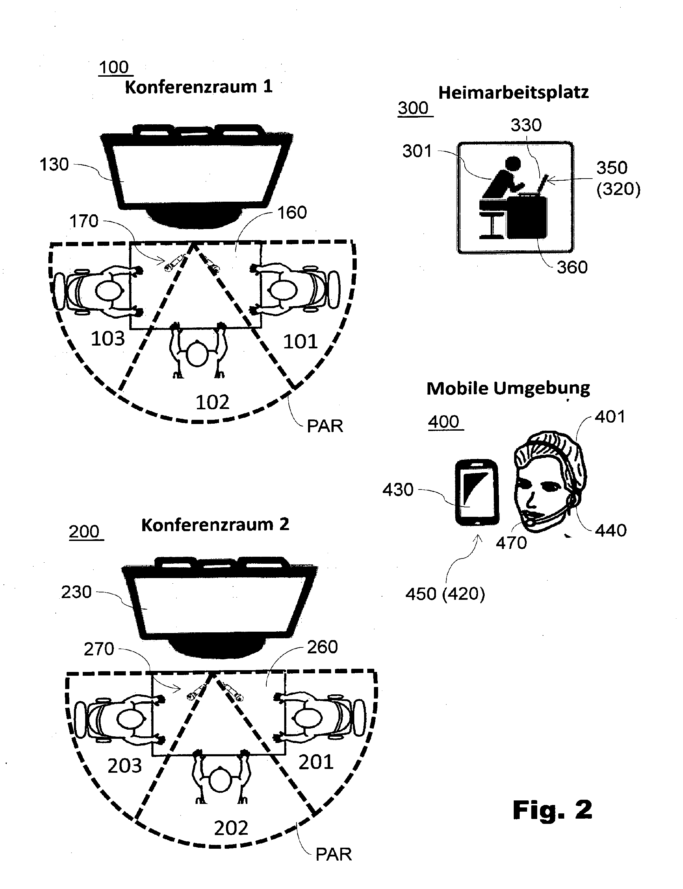

Es versteht sich, dass das Konferenzsystem 1 mehr Konferenzumgebungen aufweisen kann als die in Fig. 1 beispielhaft dargestellte Konferenzumgebung 100. Beispielhaft sind in Fig. 2 Konfigurationen eines ersten Konferenzraums 100, eines zweiten Konferenzraums 200, eines Heimarbeitsplatzes 300 und einer mobilen Umgebung 400 als Konferenzumgebungen des Konferenzsystems 1 gezeigt.

Gemäß der Darstellung in Fig. 2 weist die Konferenzumgebung 100 (erster Konferenzraum bzw. Konferenzraum 1) neben den in Fig. 1 gezeigten Gerätschaften, von denen in Fig. 2 beispielhaft die Bildwiedergabeeinheit 130 gezeigt ist, einen Konferenztisch 160 auf, auf welchem eine Mikrofonanordnung 170 platziert ist, auf. Die Mikrofonanordnung 170 weist beispielhaft zwei Einzelmikrofone auf, die in einem Winkel derart angeordnet sind, dass ein physikalischer akustischer Raum PAR im Bereich des Konferenztisches 160 akustisch abgedeckt ist. Um den Konferenztisch 160 herum sind drei Teilnehmer 101, 102, 103 in etwa gleichmäßig verteilt platziert. Auf diese Weise können die Teilnehmer 101, 102, 103 durch die Mikrofonanordnung 170 leicht räumlich geortet und in etwa gleich großen Segmenten des physikalischen akustischen Raums PAR zugeordnet werden. Endgeräte der Teilnehmer 101, 102, 103 sind hier nicht näher dargestellt.

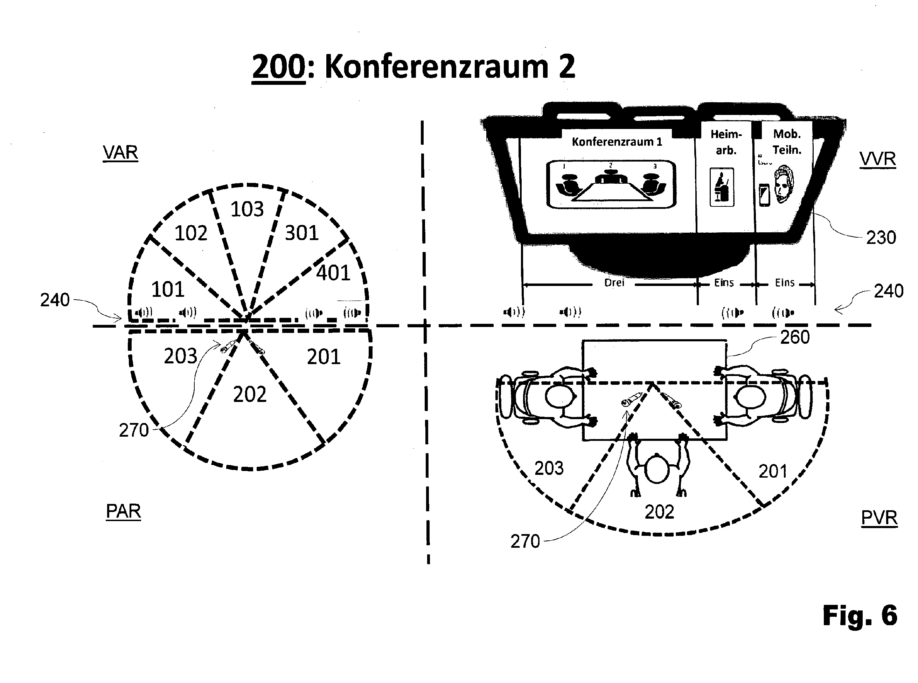

In ähnlicher Weise weist die Konferenzumgebung 200 (zweiter Konferenzraum bzw. Konferenzraum 2) neben einer Bildwiedergabeeinheit 230 einen Konferenztisch 260 auf, auf welchem eine Mikrofonanordnung 270 platziert ist, auf. Die Mikrofonanordnung 270 weist beispielhaft zwei Einzelmikrofone auf, die in einem Winkel derart angeordnet sind, dass ein physikalischer akustischer Raum PAR im Bereich des Konferenztisches 260 akustisch abgedeckt ist. Um den Konferenztisch 260 herum sind drei Teilnehmer 201, 202, 203 in etwa gleichmäßig verteilt platziert. Auf diese Weise können die Teilnehmer 201, 202, 203 durch die Mikrofonanordnung 270 leicht räumlich geortet und in etwa gleich großen Segmenten des physikalischen akustischen Raums PAR zugeordnet werden. Obschon Fig. 2 nicht näher dargestellt, weist der zweite Konferenzraum 200 eine ähnliche Konfiguration wie der erste Konferenzraum 100 gemäß Fig. 1 auf und weist auch eine lokale Konferenzeinheit, eine Tonwiedergabeeinheit (240, vgl. Fig. 6) und Endgeräte der Teilnehmer 201, 202, 203 auf.

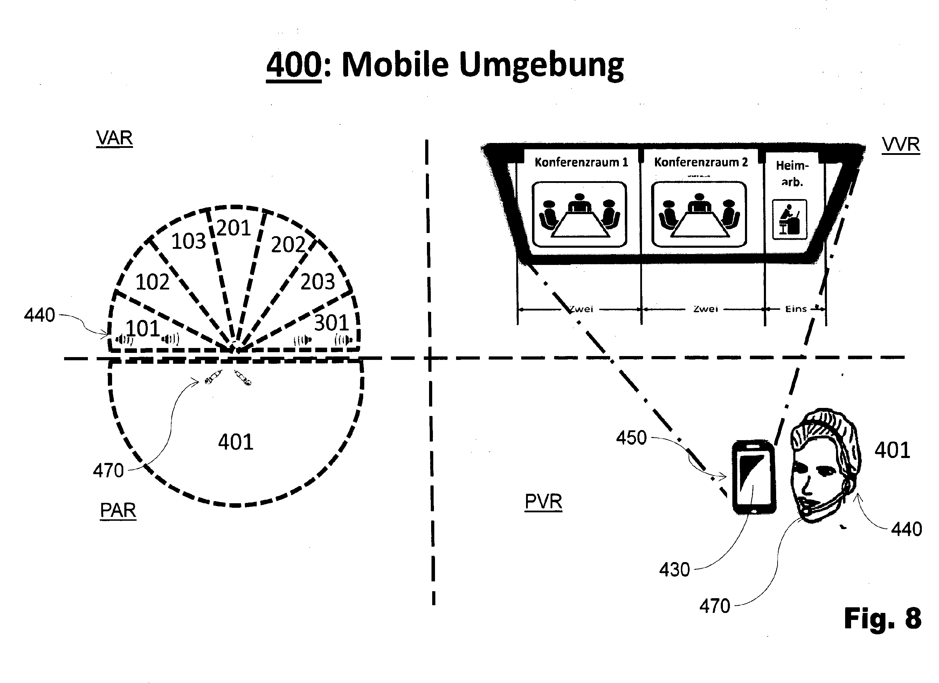

Die Konferenzumgebung 300 ist ein Heimarbeitsplatz, der einem einzigen Teilnehmer (Heimarbeiter) 301 zugeordnet ist. Der Heimarbeitsplatz 300 weist einen Konferenztisch 360 mit einem Endgerät (hier ein Laptop-Computer) 350 auf. Das Endgerät 350 dient hier auch als lokale Konferenzeinheit 320 bzw. weist einen entsprechenden Dienst auf. Das Endgerät 350 weist einen Bildschirm auf, der auch als Bildwiedergabeeinheit 330 der Konferenzumgebung 300 dient. Selbstverständlich kann auch eine an dem Endgerät 350 angeschlossene periphere Bildschirmeinheit oder Projektoreinheit (Beamer) oder dergleichen als Bildwiedergabeeinheit der Konferenzumgebung 300 vorgesehen sein. Obschon in der Figur nicht näher dargestellt, kann an dem Endgerät 350 ein Headset angeschlossen sein, das ein Einzelmikrofon als Mikrofonanordnung (370, vgl. Fig. 8) und zwei Ohrmuscheln als Tonwiedergabeeinheit (340, vgl. Fig. 8) aufweist.

Die Konferenzumgebung 400 ist eine mobile Umgebung, die einem einzigen Teilnehmer (mobiler Teilnehmer) 401 zugeordnet ist, der ein Endgerät 450 in Gestalt eines Smartphones mit sich führt. Das Endgerät 450 dient hier auch als lokale Konferenzeinheit 420 bzw. weist einen entsprechenden Dienst auf. Das Endgerät 450 weist einen Bildschirm auf, der auch als Bildwiedergabeeinheit 430 der Konferenzumgebung 400 dient. Ein über eine Kabelverbindung oder eine drahtlose Verbindung wie etwa Bluetooth, Infrarotschnittstelle oder dergleichen an dem Endgerät 450 angeschlosses Headset weist ein Einzelmikrofon als Mikrofonanordnung 470 und zwei Ohrmuscheln als Tonwiedergabeeinheit 440 auf.

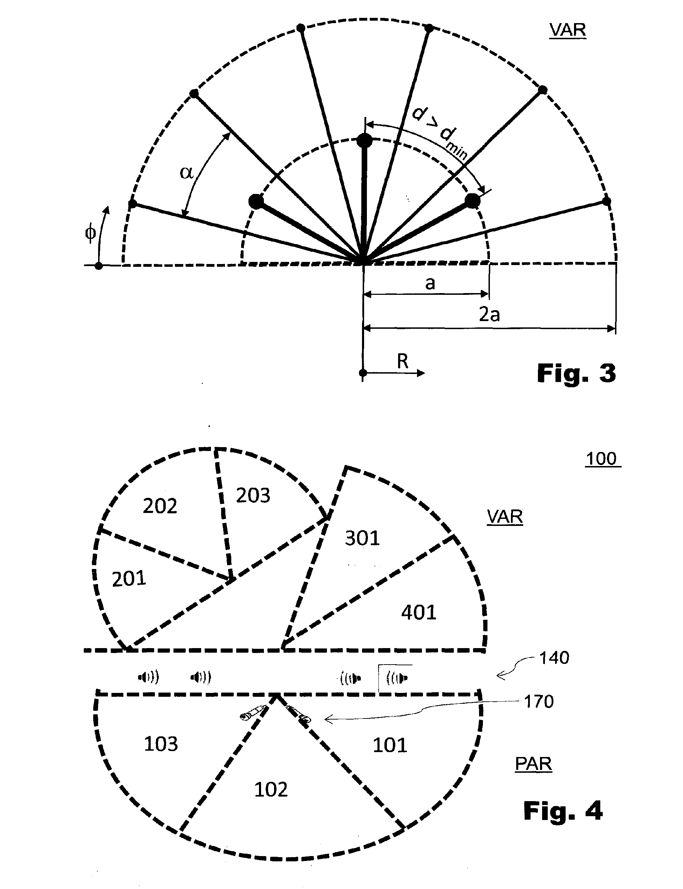

Im Folgenden wird anhand der Darstellung in Fign. 3 bis 5 zunächst beschrieben, wie mittels einer als "Spatial Audio" bekannten Technologie die Teilnehmer der Konferenzumgebungen 200, 300, 400 in einem virtuellen akustischen Raum VAR der Konferenzumgebung 100 platziert werden können. Dabei wird angestrebt, die Teilnehmer in der Konferenz akustisch so anzuordnen, wie man sie auch in der Bilddarstellung sehen kann. Deshalb wählt man den virtuellen akustischen Raum VAR als den Raum, der durch einen gegenüber dem Konferenztisch liegenden Halbkreis gebildet wird. Ein maximaler Winkel des virtuellen akustischen Raums VAR wird also auf 180° festgelegt. Nun ist noch festzulegen, wie die einzelnen Teilnehmer bzw. Teilnehmergruppen von links nach rechts angeordnet werden. Dabei soll die akustische Reihenfolge der optischen Reihenfolge entsprechen. Es versteht sich, dass dies von dem Beobachter abhängt.

Als Beispiel werde eine ideale Anordnung im Konferenzraum 1 (Konferenzumgebung 100) betrachtet. Dort sitzen die realen Teilnehmer 101, 102, 103 im physikalischen Raum links und rechts vor der Mikrofonanordnung 170 (vgl. Fig. 2). Der Rest soll akustisch dort aufscheinen, wo noch niemand sitzt, das ist vorne, wo auch das Videobild erscheint. In diesen freien akustischen Raum werden jetzt die übrigen Teilnehmer akustisch eingeordnet.

Der Platz, den ein Teilnehmer auf dem Halbkreis hat, soll $d_{min}$, der Abstand der Halbkreise soll a sein, so errechnet sich der Radius des Halbkreises:

$$R = a * k,$$

wobei k durch die Zahl der Konferenzteilnehmer N festgelegt wird:

$$k = \textbf{\textit{Ganzzahl}}(1+(N*d_{min})/(\pi *a)).$$

aufgrund von Rundungsfehlern beim Rechnen kann es vorteilhaft sein, die Formel

$$k = \textbf{\textit{Ganzzahl}}(0{,}9999+(N*d_{min})/(\pi *a))$$

zu verwenden.

Wenn als ein Beispiel $d_{min}$ = 1 m und a = 1 m angenommen wird, dann kann man maximal 15 Personen im Halbkreis platzieren, denn es ist sinnvoll, R nicht grösser als 5,5 m zu wählen.

Der Einfachheit halber seien im Folgenden die Personenabstände $d_{min}$ und die Radien-Einheiten a als ganze Meter gewählt, dann ergibt sich bei einem Radius von 5 m, dass maximal 15 Personen im Halbkreis angeordnet werden können. Bei mehr als 15 Personen werden die Personen in verschiedenen Halbkreisen hintereinander angeordnet, also im Abstand 1 m die ersten 3 Personen, im Abstand 2 m die nächsten 6 Personen, im Abstand 3 m die nächsten 9 Personen, im Abstand 4 m die nächsten 12 Personen und im Abstand 5 m die nächsten 15 Personen. Das heißt, bei den gewählten Einstellungen können bis zu 45 Personen angeordnet werden.

Im Falle, dass $d_{min}$ = $\pi/4$ m und a = $\pi$ /4 m angenommen wird, was in der Realität die dichtest mögliche Anordnung sein könnte, so können in den vernünftigen Grenzen, r = $\pi/4$ ... 5,5 m insgesamt 7 Halbkreise hintereinander belegt und damit insgesamt 84 Personen akustisch noch sinnvoll verteilt werden. Man kann natürlich das Verfahren über die Radiusgrenze von 5,5 m hinaus noch anwenden, unterhalb dieser Grenze scheint jedoch das Verhältnis von Aufwand zu Mehrwert vorzugswürdig zu sein.

Die räumliche Verteilung der Personen im Halbkreis ergibt sich aus den folgenden Überlegungen:

Wenn eine Anzahl von Personen, die auf einem Halbkreis verteilt werden sollen, M ist, und der Index der Person i sei, also die erste Person den Index 1 hat und die letzte Person den Index M hat, so ist ein Winkel $\alpha$ zwischen den Personen :

$$\alpha = 180° / M.$$

$M_{max}$ sei die maximal in einem Halbkreis anzuordnende Personenzahl (bei $d_{min}$ = 1; a = 1; $R_{max}$ = 5, dann ist $M_{max}$ = 15, siehe Rechnung weiter oben). Die Position der Person i ergibt sich dann wie folgt:

Falls i <= $M_{max}$ geschieht die Anordnung in einem Halbkreis:

$$R = a * k,$$

mit k gemäß vorstehender Beschreibung,

$$\alpha = 180° / M.$$

Die Höhenposition z-Koordinate wird in einer Ebene mit den Konferenzteilnehmern im Raum angesetzt.

Die Position von der Person i :

$$R \text{ mit dem Winkel } \phi(i) = \alpha/2 + \alpha*(i-1) \text{ und } Z(\text{Höhenwert})$$

Beispiel für a=1 und $d_{min}$=1 :

Für i > 15 sind dann die Reihen folgendermaßen zu füllen:

- Die ersten 3 Personen:

    r = 1 m

    $\alpha$ = 60°

    $\phi$ = 30°, 90°, 120°.

- Die nächsten 6 Personen:

    r = 2 m

    $\alpha$ = 30°

    $\phi$ = 15°, 45°, 75°, 105°, 135°, 165°

- Die nächsten 9 Personen

r = 3 m

$\alpha = 20°$

$\phi = 10°, 30°, 50°, 70°, 90°, 110°, 130°, 150°, 170°$.

Die weiteren Positionen ergeben sich aus der Formel.

Anhand der Darstellung in Fig. 4 wird nun der nichtideale Fall beschrieben.

Im nichtidealen Fall können die Personen in den Konferenzräumen nicht gerendert, d. h., optisch / akustisch zugeordnet werden. Deshalb wird der darzustellende Konferenzraum wie eine einzige virtuelle akustische und optische Person behandel, die einen größeren Platzbedarf hat. Der Platzbedarf errechnet sich abhängig von den idealen Formeln aus der Anzahl der im Konferenzraum befindlichen Personen.

Im gegebenen Beispiel wird r so berechnet wie im idealen Fall, und der Winkel entspricht der Hälfte der für alle Personen im Konferenzraum zur Verfügung gestellten Winkel. Wenn also n die Anzahl der Personen im Konferenzraum ist, so wird

$$\text{Winkel}_{\text{Konferenzraum}} = \alpha_{\text{links schon verwendet}} + \alpha * n/2.$$

Der Konferenzraum muss in diesem Falle akustisch nach

- links gedreht werden, und zwar um $(90° - 0{,}5 * \text{Winkel}_{\text{Konferenzraum}})$, falls $\text{Winkel}_{\text{Konferenzraum}}/2 < 90°$,

- rechts gedreht werden und zwar um $(180° - 0{,}5 * \text{Winkel}_{\text{Konferenzraum}})$, falls $\text{Winkel}_{\text{Konferenzraum}}/2 > 90°$, bZW.

- nicht verändert werden, falls $\text{Winkel}_{\text{Konferenzraum}}/2 = 90°$.

Zurückkommend auf das Beispiel mit vier Konferenzumgebungen 100, 200, 300, 400 gemäß Fig. 2 muss für jede beobachtende Seite, d.h. für jede der Konferenzumgebungen 100, 200, 300, 400, der virtuelle akustische Raum VAR separat erzeugt werden, also in unserem Beispiel für Konferenzumgebung 100 (Konferenzraum 1), Konferenzumgebung 200 (Konferenzraum 2), Konferenzumgebung 300 (Heimarbeitsplatz) und Konferenzumgebung 400 (Mobiler Teilnehmer).

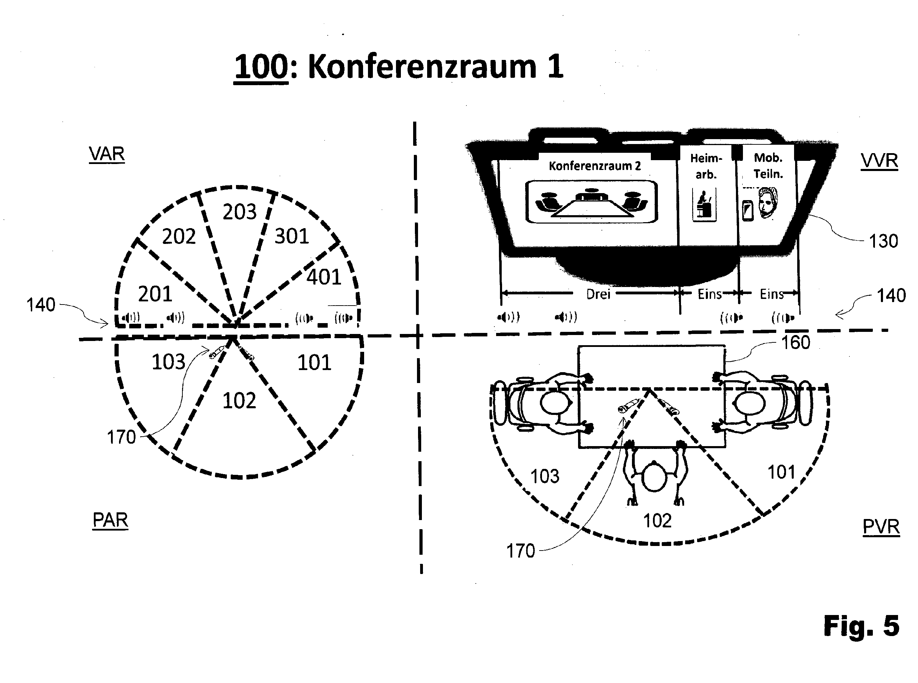

In den Fign. 5 bis 8 ist jeweils für eine der Konferenzumgebungen 100, 200, 300, 400 im rechten unteren Quadranten ein physikalischer visueller Raum PVR, der dem visuellen Eindruck eines physikalischen Beobachters entspricht, im linken unteren Quadranten ein physikalischer akustischer Raum PAR, der dem akustischen Eindruck eines physikalischen Beobachters entspricht, im rechten oberen Quadranten ein virtueller visueller Raum VVR, der den Teilnehmern in der betreffenden Konferenzumgebung vermittelt wird, und im linken oberen Quadranten ein virtueller akustischer Raum VAR, der den Teilnehmern in der betreffenden Konferenzumgebung vermittelt wird, dargestellt.

Die akustische Reihenfolge muss natürlich synchron zu der Reihenfolge der Videobilder sein. Wenn man akustisch rendern kann und die Videobilder rendert, ist man mit der Verteilung der Personen im Raum frei und könnte sie willkürlich anordnen. Es macht jedoch Sinn, die Personen, die in den Konferenzräumen zusammen sind, auch räumlich so zu belassen, da dann die Interaktionen untereinander (Gesichtszuwendung und Akustik) verständlich bleiben.

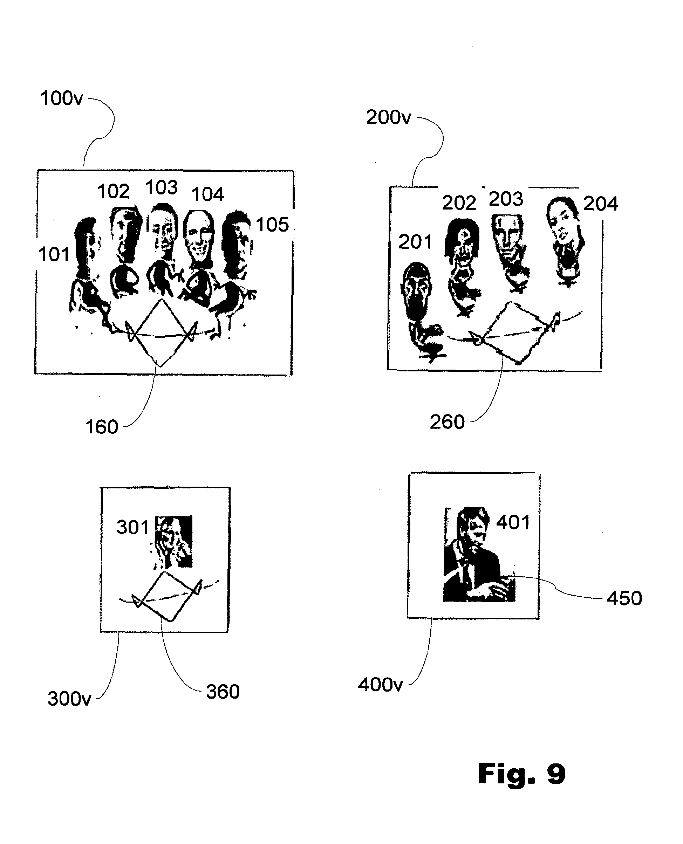

Es wird nun anhand der Fign. 9 bis 11 eine Videokonferenz und ihr Steuerungsverfahren gemäß einem weiteren Ausführungsbeispiel beschrieben. Die Videokonferenz dieses Ausführungsbeispiels findet zwischen den Konferenzumgebungen 100, 200, 300 und 400 gemäß Beschreibung des vorherigen Ausführungsbeispiels statt, allerdings sei die Konferenzumgebung 100 (Konferenzraum 1) mit fünf Teilnehmern 101, 102, 103, 104, 105 belegt, sei die Konferenzumgebung 200 (Konferenzraum 2) mit vier Teilnehmern 201, 202, 203, 204 belegt und entsprechen die Konferenzumgebungen 300 mit einem Teilnehmer 301 in Form eines Heimarbeiters und die Konferenzumgebung 400 mit einem Teilnehmer 401 in Form eines mobilen Teilnehmers dem zuvor beschriebenen Fall. Soweit sich aus den Figuren und der nachstehenden Beschreibung nichts anderes ergibt, sind Beschreibungen und Darstellungen gemäß Fign. 1-8 gleichermaßen auf dieses Ausführungsbeispiel anzuwenden.

Fig. 9 ist eine schematische Darstellung virtueller Abbildungen 100v, 200v, 300v, 400v, die gemäß dem Steuerungsverfahren zunächst für jede Konferenzumgebung berechnet werden.

Genauer gesagt, für die Konferenzumgebung 100 wird eine virtuelle Abbildung 100v berechnet, für die Konferenzumgebung 200 wird eine virtuelle Abbildung 200v berechnet, für die Konferenzumgebung 300 wird eine virtuelle Abbildung 300v berechnet, und für die Konferenzumgebung 400 wird eine virtuelle Abbildung 400v berechnet. Die virtuelle Abbildung 100v der Konferenzumgebung 100 (Konferenzraum 1) weist Darstellungen der Teilnehmer 101, 102, 103, 104, 105 der Konferenzumgebung 100 (Konferenzraum 1) auf, die um eine Bezugsstruktur (Konferenztisch) 160 herum angeordnet sind. Die virtuelle Abbildung 200v der Konferenzumgebung 200 (Konferenzraum 1) weist Darstellungen der Teilnehmer 201, 202, 203, 204 der Konferenzumgebung 200 (Konferenzraum 2) auf, die um eine Bezugsstruktur (Konferenztisch) 260 herum angeordnet sind. Die virtuelle Abbildung 300v der Konferenzumgebung 300 (Heimarbeitsplatz) weist eine Darstellung des Teilnehmers 301 der Konferenzumgebung 300 (Heimarbeitsplatz) auf, die an einer Bezugsstruktur (Konferenztisch) 360 angeordnet ist. Die virtuelle Abbildung 400v der Konferenzumgebung 400 (Heimarbeitsplatz) weist eine Darstellung des Teilnehmers 401 der Konferenzumgebung 400 (Mobile Umgebung) auf, die an einer Bezugsstruktur (Endgerät) 450 angeordnet ist.

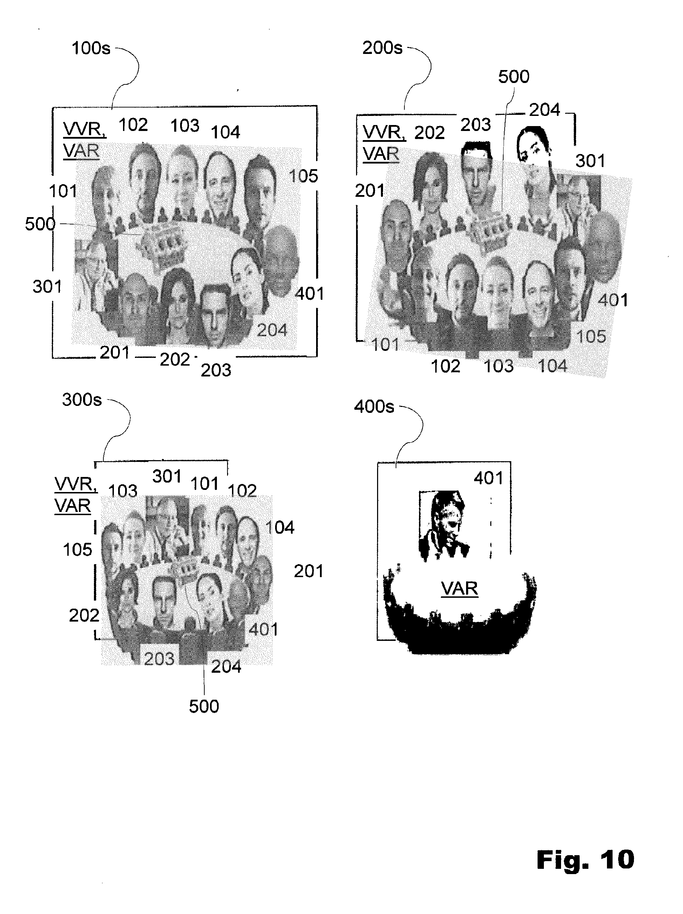

Fig. 10 ist eine schematische Darstellung von Summendarstellungen 100s, 200s, 300s, 400s, die gemäß dem Steuerungsverfahren für jede Konferenzumgebung zur Bereitstellung an alle Teilnehmer der betreffenden Konferenzumgebung berechnet werden. Die Summendarstellungen werden unter Verwendung der virtuellen Abbildungen aller Konferenzumgebungen berechnet und sind an die betreffende Konferenzumgebung, insbesondere an die Darstellungsmöglichkeiten der betreffenden Konferenzumgebung, angepasst.

Genauer gesagt, für die Konferenzumgebung 100 (Konferenzraum 1) wird eine Summendarstellung 100s berechnet, für die Konferenzumgebung 200 (Konferenzraum 2) wird eine Summendarstellung 200s berechnet, für die Konferenzumgebung 300 (Heimarbeitsplatz) wird eine Summendarstellung 300s berechnet, und für die Konferenzumgebung 400 (Mobiler Teilnehmer) wird eine Summendarstellung 400s berechnet. Jede der Summendarstellungen 100s, 200s, 300s, 400s wird unter Verwendung aller virtuellen Abbildungen 100v, 200v, 300v, 400v berechnet.

Mit anderen Worten, die Summendarstellungen der betreffenden Konferenzumgebungen weisen jeweils Darstellungen aller Teilnehmer, d.h., der Teilnehmer 101, 102, 103, 104, 105 der Konferenzumgebung 100 (Konferenzraum 1), der Teilnehmer 201, 202, 203, 204 der Konferenzumgebung 200 (Konferenzraum 2), des Teilnehmers 301 der Konferenzumgebung 300 (Heimarbeitsplatz) und des Teilnehmers 401 der Konferenzumgebung 400 (Mobile Umgebung) auf, die um eine Bezugsstruktur (Konferenztisch) herum angeordnet sind. Dabei wird die Verteilung der Teilnehmer in der Summendarstellung jeweils so gewählt, dass die Teilnehmer der betreffenden Konferenzumgebung im Hintergrund der jeweiligen Summendarstellung mittig platziert werden (gewissermaßen als "Spiegel" der betreffenden Konferenzumgebung), und die Teilnehmer der anderen Konferenzumgebungen werden im Anschluss daran gleichmäßig um die Bezugsstruktur herum verteilt. D.h., in der Summendarstellung 100s für die Konferenzumgebung 100 (Konferenzraum 1) sind die Teilnehmer 101, 102, 103, 104, 105 der betreffenden Konferenzumgebung 100 (Konferenzraum1) im Hintergrund der Summendarstellung 100s mittig platziert, und die restlichen Teilnehmer sind rechts und links im Anschluss daran gleichmäßig um die Bezugsstruktur herum verteilt. Weiter sind in der Summendarstellung 200s für die Konferenzumgebung 200 (Konferenzraum 2) die Teilnehmer 201, 202, 203, 204 der betreffenden Konferenzumgebung 200 (Konferenzraum 1) im Hintergrund der Summendarstellung 200s mittig platziert, und die restlichen Teilnehmer sind rechts und links im Anschluss daran gleichmäßig um die Bezugsstruktur herum verteilt. Ferner ist in der Summendarstellung 300s für die Konferenzumgebung 300 (Heimarbeitsplatz) der Teilnehmer 301 der betreffenden Konferenzumgebung 300 (Heimarbeitsplatz) im Hintergrund der Summendarstellung 300s mittig platziert, und die restlichen Teilnehmer sind rechts und links im Anschluss daran gleichmäßig um die Bezugsstruktur herum verteilt. Schließlich ist in der Summendarstellung 400s für die Konferenzumgebung 400 (mobile Umgebung) der Teilnehmer 401 der betreffenden Konferenzumgebung 400 (mobile Umgebung) im Hintergrund der Summendarstellung 400s mittig platziert, und die restlichen Teilnehmer sind rechts und links im Anschluss daran gleichmäßig um die Bezugsstruktur herum verteilt.

Jede der Summendarstellungen 100s, 200s, 300s, 400s weist einen visuellen Teil in Form eines virtuellen visuellen Raums VVR und einen akustischen Teil in Form eines virtuellen akustischen Raums VAR im Sinne der Beschreibung der Fign. 5 bis 8 auf.

Je nach den Wiedergabemöglichkeiten der betreffenden Konferenzumgebung werden der virtuelle visuelle Raum VVR und der virtuelle akustische Raum VVR aufbereitet und den Teilnehmern bzw. dem Teilnehmer der betreffenden Konferenzumgebung bereitgestellt. So ist in den Summendarstellungen 100s, 200s, 300s für die Konferenzumgebung 100 (Konferenzraum 1), die Konferenzumgebung 200 (Konferenzraum 2) und die Konferenzumgebung 300 (Heimarbeitsplatz) eine visuelle Darstellung aller Teilnehmer im virtuellen visuellen Raum VVR vorgesehen, und sind die Positionen der Teilnehmer im virtuellen akustischen Raum VAR den Positionen im virtuellen visuellen Raum VVR angepasst, sodass über das entsprechende Bildwiedergabegerät 130, 230, 330 (vgl. Fign. 1, 2, 5-8) und das entsprechende Schallwiedergabegerät 140, 240, 340 (ebda.) eine natürlich erscheinende, virtuelle Konferenzrealität geschaffen wird, in denen die visuelle und akustische Position jedes Teilnehmers für die tatsächlich in dem betreffenden Konferenzraum befindlichen Teilnehmer wenigstens im Wesentlichen übereinstimmen.

Dagegen weist die Summendarstellung 400s für die Konferenzumgebung 400 (mobile Umgebung) gemäß der Darstellung in Fig. 10 nur den virtuellen akustischen Raum WR auf, der an die Wiedergabemöglichkeiten eines (oft nur zweikanaligen) Headsets angepasst ist, weist aber keinen virtuellen visuellen Raum auf, wenn das Endgerät 450 des

EP 2 930 926 A1

(mobilen) Teilnehmers 401 über keine entsprechende visuelle Darstellungsmöglichkeit verfügt, wie es hier beispielhaft (in Abwandlung von der Darstellung in Fign. 2, 8) angenommen wird. In diesem Fall ist zwar keine Synchronität zwischen akustischem und visuellem Eindruck gegeben (da letzterer gar nicht bereitgestellt wird), dennoch ist für den (mobilen) Teilnehmer 401 noch der Vorteil gegeben, dass die Konferenzteilnehmer im stereophonen Raum lokalisierbar und trennbar sind. Selbstverständlich ist es auch möglich, sofern das Endgerät 450 des (mobilen) Teilnehmers 401 über eine entsprechende visuelle Darstellungsmöglichkeit verfügt, wie es in Fig. 8 gezeigt ist, diesem auch einen entsprechenden virtuellen visuellen Raum WR zur Verfügung zu stellen.

Es ist auch darauf hinzuweisen, dass in den Summendarstellungen 100s, 200s, 300s in Fig. 10 der (mobile) Teilnehmer 401 als Avatar dargestellt ist, was einen Fall andeutet, in welchem das (mobile) Endgerät 450 der Konferenzumgebung 400 (mobile Umgebung) über keine Bildaufzeichnungseinrichtung verfügt und somit keine Bilddarstellung des Teilnehmers 401 liefert. In der Summendarstellung 400s ist die Darstellung des Teilnehmers 401 im Übrigen nur als Bezugspunkt für den virtuellen akustischen Raum VAR zu verstehen; es ist hier nicht vorgesehen, den Teilnehmer 401 auf dem (mobilen) Endgerät 450 visuell darzustellen.

Zur Vermeidung von Echoeffekten und dadurch hervorgerufener Verwirrung ist vorteilhaft vorgesehen, dass in dem virtuellen akustischen Raum VAR der Summendarstellungen 100s, 200s, 300s, 400s die Teilnehmer der betreffenden Konferenzumgebung selbst ausgeblendet werden, selbst wenn sie im zugehörigen virtuellen visuellen Raum WR enthalten sind. Auch ist es möglich, dass die Teilnehmer der betreffenden Konferenzumgebung auch aus dem jeweiligen virtuellen visuellen Raum WR ausgeblendet werden, wie es in Fign. 5 bis 8 gezeigt ist. Zusätzlich zu den Teilnehmern können die Summendarstellungen, wie in den Summendarstellungen 100s, 200s, 300s dargestellt, eine symbolische Darstellung eines Objekts 500 aufweisen. Das Objekt 500 ist beispielsweise eine Datei oder eine Anwendung, die von einem Teilnehmer aufgerufen und in einem Separatfenster dargestellt oder ablaufen gelassen werden kann.

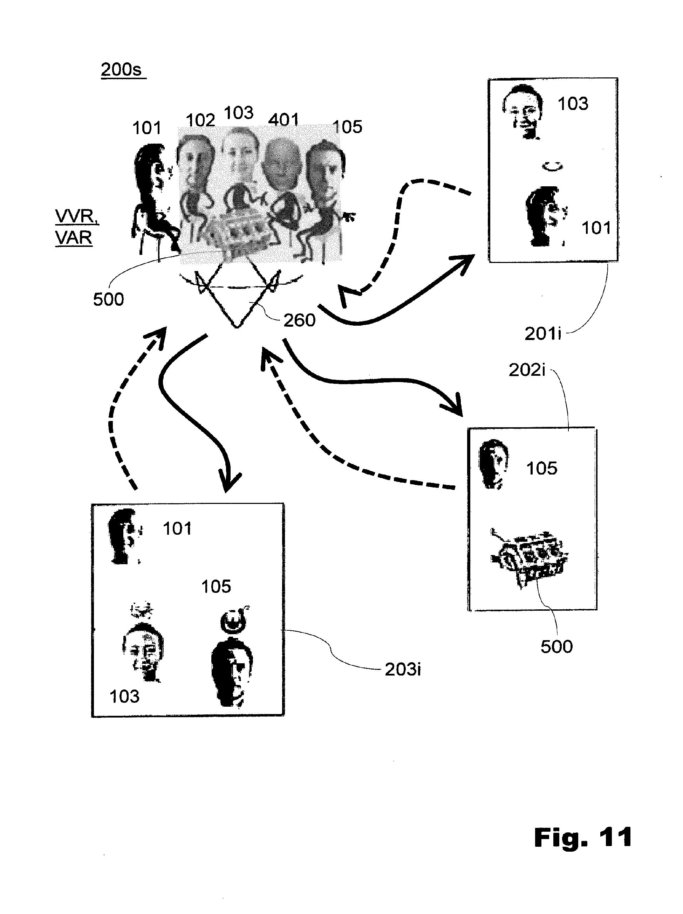

Fig. 11 ist eine schematische Darstellung der Summenansicht 200s gemäß einer Abwandlung des Ausführungsbeispiels, die gemäß dem Steuerungsverfahren für die Konferenzumgebung 200 (Konferenzraum 2) zur Bereitstellung an alle Teilnehmer der betreffenden Konferenzumgebung 200 berechnet wird, sowie mehrerer Individualansichten 201 i, 202i, 203i, die dem Steuerungsverfahren für individuelle Teilnehmer 201, 202, 203 der betreffenden Konferenzumgebung 200 zur Bereitstellung an die individuellen Konferenzteilnehmer 201, 202, 203 berechnet wird. Die Individualansichten 201 i, 202i, 203i werden unter Verwendung der Summendarstellung 200s der betreffenden Konferenzumgebung 200, zu welcher die Teilnehmer 201, 202, 203 gehören, berechnet und sind an die Teilnehmer 201, 202, 203, insbesondere an deren Vorgaben und laufenden Anforderungen sowie die Darstellungsmöglichkeiten ihrer jeweiligen individuellen Endgeräte, angepasst.

Die Summenansicht 200s, die in Fig. 11 dargestellt ist, unterscheidet sich von der in Fig. 10 dargestellten Summenansicht 200s darin, dass nur die Teilnehmer 101, 102, 103, 105 der Konferenzumgebung 100, der Avatar des Teilnehmers 401 und das Objekt 500 an der Bezugsstruktur 260 angeordnet sind und gemäß vorstehender Beschreibung den virtuellen visuellen Raum VVR und den virtuellen akustischen Raum VAR bilden. Mit anderen Worten, bei der in Fig. 11 dargestellten Variante werden die Teilnehmer der betreffenden Konferenzumgebung 200 in der zugehörigen Summendarstellung 200s nicht wiedergegeben. Zudem ist in der in Fig. 11 dargestellten Konferenzsituation gegenüber der in Fig. 10 dargestellten Situation davon auszugehen, dass der Teilnehmer 104 den Konferenzraum 1 (vorübergehend) verlassen hat und sich der Heimarbeiter 301 von der Konferenz abgemeldet hat.

Die Individualansicht 201 i, die zur Bereitstellung auf dem persönlichen Endgerät des Teilnehmers 201 berechnet wird, weist gemäß der Darstellung in Fig. 11 die Teilnehmer 101 und 103 auf. Die Individualansicht 202i, die zur Bereitstellung auf dem persönlichen Endgerät des Teilnehmers 202 berechnet wird, weist den Teilnehmer 105 und das Objekt 500 auf. Die Individualansicht 203i, die zur Bereitstellung auf dem persönlichen Endgerät des Teilnehmers 203 berechnet wird, weist die Teilnehmer 101, 103, 105 auf. Die Individualansichten 201 i, 202i, 203i können eine Zoom-Funktionalität in Bezug auf die dargestellten Teilnehmer aufweisen. Den in den Individualansichten 201 i, 202i, 203i dargestellten Teilnehmern sind teilweise jeweilige Symbole, sogenannte Emoticons zugeordnet. Hier können auch Kontextinformationen beliebiger Art, wie etwa Lebensläufe, Kontaktdaten etc. zu den jeweiligen Teilnehmern über einen Backend-Service angefordert und dargestellt werden, ggf. in weiteren Separatfenstern (separat öffnenden Fenstern). Derartige Kontextdaten können beispielsweise aus den Daten im Firmenbereich oder aus den öffentlich zugänglichen Daten bzw. Datenbanken oder aus der realen Videokonferenz (Emoticons aus der Sprache oder aus dem Bild) stammen, woraus ein spezifischer Kontext für eine oder mehrere Personen in der Separatansicht generiert wird. Hierfür können beispielsweise gängige Analysetechnologien angewendet werden. Pfeile zwischen der Summendarstellung 200s und den Individualansichten 201 i, 202i, 203i symbolisieren eine Steuerungs-Funktionalität und eine Feedback-Funktionalität, die beispielsweise beinhalten kann, dass die Reaktionen jedes Konferenzteilnehmers ermittelt und dem sprechenden bzw. aktiven Teilnehmer (z. B. im Falle von Screensharing) als Feedback zugeordnet wird. Es ist auch denkbar, dass das reale Video mit Ton gespeichert wird und der sprechenden bzw. aktiven Person als Feedback zugeordnet wird. Die Zuordnung des Kontextes zu Teilnehmern wird als Feedback für den gegenwärtig handelnden Teilnehmer in der Videokonferenz interpretiert. Einwände und Beiträge von Teilnehmern zu Fragen und Aktionen der handelnden Teilnehmer können als Feedback interpretiert werden. Auch keine Reaktion kann als Feedback registriert werden. Somit gibt es eine Feedback-Historie für die handelnden Teilnehmer. Durch die Zusatzinformationen, die Konferenzteilnehmern als Feedback zugewiesen werden kann, wird für die Agierenden auch eine Steuerungsmöglichkeit geschaffen und kann auch die Zufriedenheit und Effizienz der Konferenz hoch gehalten werden. Durch die räumlich akustische Positionierung der Teilnehmer kann auch für mobile Teilnehmer eine bessere Verständlichkeit und Zuordnung der Personen zum Gesagten ermöglicht werden.

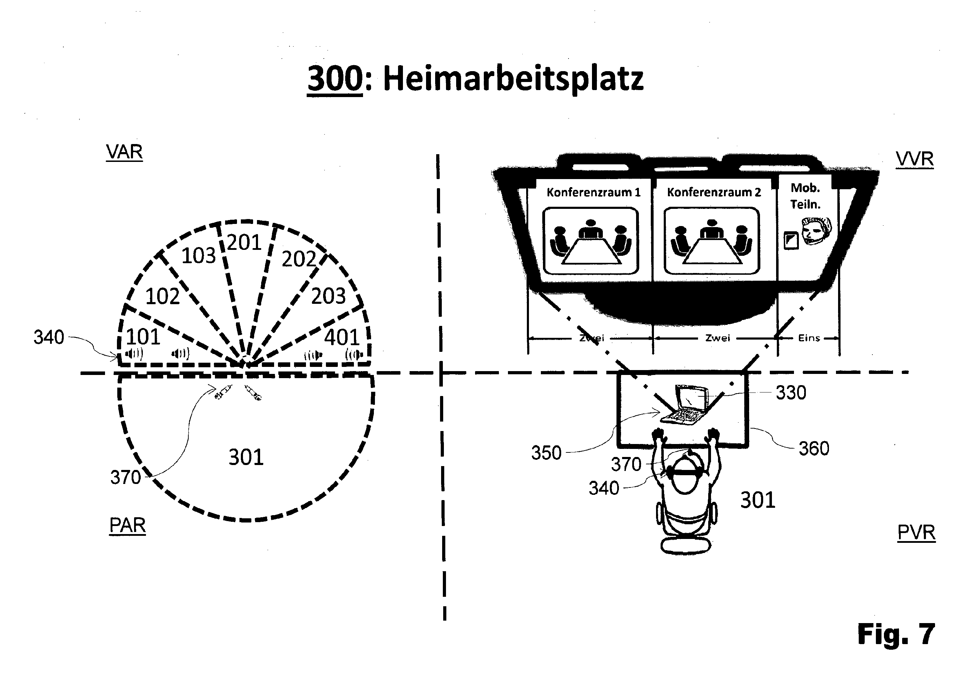

Das vorstehend geschilderte Verfahren wird vorzugsweise durch einen Konferenzserver (vgl. Konferenzserver 2 in Fig. 1) gesteuert. Einzelne Schritte können auch an nachgeordnete Geräte wie etwa eine lokale Konferenzeinheit (vgl. lokale Konferenzeinheit 120 in Fig. 1), Bild- oder Schallwiedergabegeräte (vgl. 130, 140 in Fig. 1) oder individuelle Endgeräte (vgl. 150 in Fig. 1, 350 in Fig. 7, 450 in Fig. 8) durchgeführt werden.

Die vorliegende Erfindung bietet eine neue virtuelle Gesamtsicht der Konferenz, die möglichst alle Möglichkeiten der realen Konferenz (bei der sich alle Teilnehmer in einem gleichen physikalischen Raum befinden) zugänglich macht. Darüber hinaus ist es möglich, durch Anwählen eines virtuellen Bildes auf Backend-Dienste zuzugreifen, die kontextuelle Informationen zu dem jeweiligen Teilnehmer enthalten, z. B. Aussagen über den speziellen beruflichen Werdegang des Teilnehmers, subjektive Erfahrungen mit dem Teilnehmer in der Vergangenheit, persönliche Notizen, die in seinen Kontaktdaten vermerkt sind, und letztlich auch emotionale Attribute, die der Konferenzteilnehmer persönlich diesem Teilnehmer in der Vergangenheit zugeordnet hat. Während der Konferenz können diese individuellen Informationen und Einschätzungen auch geändert, erweitert oder revidiert werden. Alle diese Daten sind hochgradig individuell und subjektiv und dürfen daher keinem weiteren Teilnehmer in der Konferenz zugänglich gemacht werden. Die Erfindung beschreibt ein Verfahren, wie eine virtuelle Konferenz besonders effektiv zusammengeführt wird und zudem individuelle Teilsichten ermöglicht werden. Dies kann dadurch geschehen, dass die reale Konferenzumgebung um den virtuellen Raum erweitert wird, oder dadurch, dass einem Teilnehmer nur der individuelle Raum zur Verfügung gestellt wird. Jeder Teilnehmer kann immer zumindest die Bildinformation bzw. den Videostream auf seinem persönlichen mobilen Endgerät angeboten bekommen.

Erfindungsgemäß steuert die Konferenzeinheit (oder der zentrale Konferenzserver) nicht nur die gemeinsame Sicht der Konferenz (Video/Audio), sondern stellt eine eigene logische Einheit pro Teilnehmer/Konferenzumgebung zur Verfügung. Diese individuelle Konferenzeinheit kann individuell angesteuert werden: zoomen, Personen auswählen, Kontext einblenden, Mood, persönliche Beziehung. Jeder Teilnehmer der Konferenz bekommt eine private Sicht eines virtuellen Konferenzraumes zur Verfügung gestellt. Alle Teilnehmer und Konferenzräume werden virtuell in einem Raum unter Zuhilfenahme einer Technologie, wie sie beispielsweise unter der Bezeichnung "ViViconf" zugänglich ist, virtuell in einem Raum verteilt. Mit Hilfe einer Technologie, die beispielsweise unter der Bezeichnung "Spatial Audio" zugänglich ist, wird die akustische Position mit der optischen Position synchronisiert.

Teilnehmer, die gemeinsam in einem Konferenzraum sitzen, haben einen gemeinsamen virtuellen Raum mit akustischer Zuordnung aller nicht im Raum befindlicher Konferenzteilnehmer. Der individuelle virtuelle Konferenzraum, in diesem Fall ohne akustische Synchronisierung, kann jeweils auf dem persönlichen mobilen Endgerät (z. B. Tablet, Smartphone oder dergleichen) angezeigt werden. Dies ist wünschenswert, um den privaten Kontext, auch der im Raum befindlichen Teilnehmer, anzeigen zu können. Alternativ kann beispielsweise ein Laptop oder Bildschirm mit einem begrenzten Sichtwinkel, der z.B. durch Aufbringen einer geeigneten Folie auf die Oberfläche des Laptops oder Bildschirms eingeschränkt werden kann, von dem individuellen Teilnehmer verwendet werden. Durch den begrenzten Sichtwinkel kann vermieden werden, dass Nachbarn des individuellen Teilnehmers einen Darstellungsinhalt des Laptops oder Bildschirm erkennen können.

Um den Ressourcen- und Performanz-Bedarf zu minimieren, kann vorgesehen sein, dass die Bilder im virtuellen Konferenzraum immer gleich sortiert werden, z.B. von links nach rechts: Konferenzraum 1, Konferenzraum 1, ..., Einzelteilnehmer 1, Einzelteilnehmer 2, .... Somit lässt sich der virtuelle Konferenzraum für jede "View" einfach durch optisches und akustisches Subtrahieren des Individuums bzw. des Konferenzraumes generieren bzw. berechnen. Damit ist eine Möglichkeit geschaffen, die akustische und optische Platzierung nur einmal vorzunehmen. Die Konferenzteilnehmer werden gleich mit gleichverteilt im virtuellen Konferenzraum dargestellt. Dies ist vorteilhaft, um im "Spatial Audio" eine möglichst differenzierte Raumposition erreichen zu können.

Somit erstellt die Konferenzeinheit mehrere "Sichten" der Videokonferenz:

- Sie verarbeitet für jeden einzelnen Standort (Konferenzumgebung) die ihr gelieferten Mediadaten (virtuelle Abbildungen) der unterschiedlichen Teilnehmer- oder Raumkameras und -mikrofone zu einem virtuellen Konferenzraum (Summendarstellung) der jeweiligen Konferenzumgebung. Dabei wird jeder Teilnehmer neben den tatsächlich anwesenden Teilnehmer im betreffenden Raum explizit platziert und entsprechend auch seine Stimme in derselben Position angeordnet, sodass die Stimme aus derselben Richtung wie das Bild kommt. Ein echtes Raumgefühl entsteht, da verschiedene Personen bzw. Konferenzumgebungen strukturiert im Raum angeordnet werden.

- Für Teilnehmer, die in einem Konferenzraum sitzen, wird durch das additive individuelle Videobild der virtuellen Konferenz auf einem persönlichen mobilen Endgerät die Möglichkeit gegeben, einfach via Mausklick, Bildschirmberührung oder dergleichen, auch auf den Kontext der im Konferenzraum sitzenden Teilnehmer zugreifen zu können.

- In der individuellen Sicht (Individualansicht) ordnet die Konferenzeinheit dem Bild die Identität zu. Somit kann man die jeweiligen Kontextdaten einfach den Konferenzteilnehmer zuordnen.
- Aus den verfügbaren Mediadaten erstellt die Konferenzeinheit wählbare Module, die jeder Teilnehmer individuell zu seiner privaten Sicht (Individualansicht) auswählen kann, z. B. den Teilnehmer im Home-Office, oder den Teilnehmer, der gerade referiert. Abhängig von der im privaten Profil vermerkten Anweisung (die jederzeit geändert werden kann) werden von der Konferenzeinheit zusätzliche Metadaten in die private Sicht (Individualansicht) integriert. Diese stammen entweder aus den privaten Kontaktdaten, oder aus einer Auswahl von öffentlich zugänglichen Informationen, die durch die Konferenzeinheit oder ihm vorgelagerte Back-End-Server inkrementell auch während der Konferenz ergänzt werden.

Die unter Bezug auf die dargestellten Ausführungsformen beschriebenen Merkmale der Erfindung, z.B. das Anzeigen des individuellen virtuellen Konferenzraum ohne akustische Synchronisierung jeweils nur auf dem persönlichen mobilen Endgerät (z. B. Tablet, Smartphone oder dergleichen) eines individuellen Teilnehmers der Konferenz, können auch bei anderen Ausführungsformen der Erfindung, z.B. dem Verwenden von einem Laptop oder Bildschirm mit einem begrenzten Sichtwinkel durch den gleichen oder einen anderen individuellen Teilnehmer, vorhanden sein, außer wenn es anders angegeben ist oder sich aus technischen Gründen von selbst verbietet.

Liste der Bezugszeichen und Symbole

| | |
|---|---|
| 1 | Konferenzsystem |
| 2 | Konferenzserver |
| 3 | Netzwerkverbindung |
| 4 | Intranet |
| 100 | Konferenzumgebung (Konferenzraum 1) |
| 100v | Virtuelle Abbildung (von Konferenzraum 1) |
| 100s | Summendarstellung (für Konferenzraum 1) |
| 101, ..., 105 | Teilnehmer |
| 120 | Lokale Konferenzeinheit |
| 125 | Netzwerkverbindung |
| 130 | Bildwiedergabeeinheit |
| 135 | Verbindung (leitungsgebunden) |
| 140 | Tonwiedergabeeinheit |
| 145 | Verbindung (leitungsgebunden) |
| 150 | Endgerät |
| 155 | Verbindung (drahtlos) |
| 160 | Konferenztisch / Bezugsstruktur |
| 170 | Mikrofonanordnung |
| 200 | Konferenzumgebung (Konferenzraum 2) |
| 200v | Virtuelle Abbildung (von Konferenzraum 2) |
| 200s | Summendarstellung (für Konferenzraum 2) |
| 201, ..., 204 | Teilnehmer |
| 201 i, ..., 203i | Individualansicht für Teilnehmer 201, ..., 203 |
| 230 | Bildwiedergabeeinheit |
| 240 | Tonwiedergabeeinheit |
| 260 | Konferenztisch / Bezugsstruktur |
| 270 | Mikrofonanordnung |
| 300 | Konferenzumgebung (Heimarbeitsplatz) |
| 300v | Virtuelle Abbildung (von Heimarbeitsplatz) |
| 300s | Summendarstellung (für Heimarbeitsplatz) |
| 301 | Teilnehmer (Heimarbeiter) |
| 320 | Lokale Konferenzeinheit |
| 330 | Bildwiedergabeeinheit |
| 340 | Tonwiedergabeeinheit |
| 350 | Endgerät |
| 360 | Arbeitstisch / Bezugsstruktur |
| 370 | Mikrofonanordnung |

| 380 | Kameraanordnung |
| 400 | Konferenzumgebung (Mobile Umgebung) |
| 400v | Virtuelle Abbildung (von Mobiler Umgebung) |
| 400s | Summendarstellung (für Mobilen Teilnehmer) |
| 401 | (Mobiler) Teilnehmer |
| 420 | Lokale Konferenzeinheit |
| 430 | Bildwiedergabeeinheit |
| 440 | Tonwiedergabeeinheit |
| 450 | Endgerät |
| 470 | Mikrofonanordnung |

| a | Halbkreisabstand |
| d | Positionsabstand |

| PAR | Physikalischer akustischer Raum |
| PVR | Physikalischer visueller Raum |
| R | Radius |
| VAR | Virtueller akustischer Raum |
| WR | Virtueller visueller Raum |

| $\alpha$ | Winkelabstand |
| $\phi$ | Positionswinkel |

Die vorstehende Liste ist integraler Bestandteil der Beschreibung.

**Patentansprüche**

1. Verfahren zur Steuerung einer virtuellen Konferenz, wobei das Verfahren die Schritte aufweist:

   a) Berechnen jeweiliger virtueller Abbildungen (100v, 200v, 300v, 400v) einer Mehrzahl von kommunikationstechnisch verbundenen Konferenzumgebungen (100, 200, 300, 400) mit jeweils einem oder mehreren darin befindlichen Teilnehmer/-n;
   b) Berechnen einer an eine betreffende der Konferenzumgebungen (100, 200, 300, 400) angepasste Summendarstellung (100s, 200s, 300s, 400s) unter Verwendung der virtuellen Abbildungen (100v, 200v, 300v, 400v) aller Konferenzumgebungen (100, 200, 300, 400);
   c) Bereitstellen der Summendarstellung (100s, 200s, 300s, 400s) an alle Teilnehmer der betreffenden Konferenzumgebung (100, 200, 300, 400),
   d) Berechnen einer an einen individuellen der Teilnehmer (201, 202, 203) angepassten Individualdarstellung (201 i, 202i, 203i) unter Verwendung der Summendarstellung (200s) der betreffenden Konferenzumgebung (200), welcher der individuelle Teilnehmer (201, 202, 203) angehört, und
   e) Bereitstellen der Individualdarstellung (201i, 202i, 203i) an den individuellen Teilnehmer (201, 202, 203) gleichzeitig mit der Bereitstellung der Summendarstellung (200s) gemäß Schritt c).

2. Verfahren gemäß Anspruch 1, **dadurch gekennzeichnet, dass** die Schritte a) bis e) durch eine zentrale Konferenzeinheit, insbesondere einen Konferenzserver (2), ausgeführt werden.

3. Verfahren gemäß Anspruch 1, **dadurch gekennzeichnet, dass** die Schritte b) bis e) durch eine lokale Konferenzeinheit (120), die der betreffenden Konferenzumgebung (100) zugeordnet ist, ausgeführt werden, wobei vorzugsweise dem Schritt b) ein Schritt eines Empfangens der virtuellen Abbildungen (100v, 200v, 300v, 400v) aller anderen Konferenzumgebungen vorausgeht.

4. Verfahren gemäß Anspruch 1, **dadurch gekennzeichnet, dass** die Schritte d) und e) durch eine lokale Konferenzeinheit, die der betreffenden Konferenzumgebung (100, 200, 300, 400) zugeordnet ist, ausgeführt werden, wobei vorzugsweise dem Schritt d) ein Schritt eines Empfangens der Summendarstellung (100s, 200s, 300s, 400s) für die betreffende Konferenzeinheit vorausgeht.

5. Verfahren gemäß einem der vorstehenden Ansprüche, **dadurch gekennzeichnet, dass** dem Schritt d) ein Schritt eines Empfangens und/oder Verarbeitens von individuellen Anforderungen des individuellen Teilnehmers (201, 202, 203) vorausgeht, wobei in Schritt d) der Berechnung der Individualdarstellung (201 i, 202i, 203i) die individuellen Anforderungen des individuellen Teilnehmers (201, 202, 203) zu Grunde gelegt werden.

6. Verfahren gemäß Anspruch 5, **dadurch gekennzeichnet, dass** die individuellen Anforderungen wenigstens eine aus der Gruppe umfassen, die aufweist:

   • Die räumliche Anordnung der Teilnehmer;
   • Das Entfernen, Hinzufügen, Vergrößern, Verkleinern eines oder mehrerer Teilnehmer und/oder Objekten;
   • Das Platzieren eines oder mehrerer Teilnehmer in einer Separatdarstellung (301e);
   • Das Darstellen von Meta- bzw. Zusatzinformationen wie etwa Kontextdaten, Gemütszuständen, persönlichen und/oder beruflichen Beziehungsdaten, private Kontaktdaten zu einem oder mehreren Teilnehmern, wobei solche Daten vorzugsweise von einem Dienst automatisch ermittelt werden;
   • Das Hervorheben oder Dämpfen einer Hörlautstärke für einzelne Quellen, z.B. Teilnehmer.

7. Verfahren gemäß einem der vorstehenden Ansprüche, **dadurch gekennzeichnet, dass** die Anforderungen des individuellen Teilnehmers (201, 202, 203) über Spracheingabe vermittelbar sind.

8. Verfahren gemäß einem der vorstehenden Ansprüche, **dadurch gekennzeichnet, dass** das Bereitstellen der Individualdarstellung auf einem mobilen Endgerät (150, 350, 450) erfolgt.

9. Verfahren gemäß einem der vorstehenden Ansprüche, **dadurch gekennzeichnet, dass** in den Summendarstellungen (100s, 200s, 300s, 400s) die Teilnehmer in einem virtuellen Raum (WR, VAR) optisch und/oder akustisch gleich verteilt werden.

10. Softwareprodukt, das auf einem durch einen Computer lesbaren Medium gespeichert ist und das vorzugsweise direkt in den internen Speicher eines Computer geladen werden kann und das Programmcodes zur Durchführung der Verfahrensschritte des beschriebenen Verfahrens, wenn das Computerprogramm auf dem Computer ausgeführt wird, aufweist.

11. Vorrichtung mit Mitteln zur Ausführung des Verfahrens nach einem der vorstehenden Ansprüche, wobei die Vorrichtung insbesondere ein Konferenzserver (2) oder eine lokale Konferenzeinheit (120) oder ein Endgerät (150, 350, 450) ist oder aufweist.

Fig. 1

Fig. 2

**Fig. 3**

**Fig. 4**

# 100: Konferenzraum 1

**Fig. 5**

EP 2 930 926 A1

# 200: Konferenzraum 2

VAR

VVR

PAR

PVR

240

270

230

240

260

270

103
102
301
401
101
203
201
202

Konferenzraum 1
Heim-arb.
Mob. Teiln.

Drei
Eins
Eins

203
201
202

**Fig. 6**

EP 2 930 926 A1

300: Heimarbeitsplatz

VVR

Mob. Teiln.

Konferenzraum 2

Konferenzraum 1

Eins

Zwei

Zwei

330

360

301

370

340

350

PVR

**Fig. 7**

VAR

201 202 203 401

103

102 101

301

370

340

PAR

# **400**: Mobile Umgebung

VAR

VVR

Konferenzraum 1  Konferenzraum 2  Heim-arb.

Zwei    Zwei    Eins

440

103 201 202
102 203
101 301

401

450

401

470

PAR

PVR

430

470

440

Fig. 8

EP 2 930 926 A1

Fig. 9

**Fig. 10**

Fig. 11

**Europäisches Patentamt**

**European Patent Office**

**Office européen des brevets**

## EUROPÄISCHER RECHERCHENBERICHT

Nummer der Anmeldung

EP 15 00 0585

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/076853 A1 (DIAO JIE [US]) 28. März 2013 (2013-03-28) * das ganze Dokument * ----- | 1-11 | INV. H04N7/15 |
| X | US 2009/033737 A1 (GOOSE STUART [US] ET AL) 5. Februar 2009 (2009-02-05) * das ganze Dokument * ----- | 1-11 | |
| A | EP 2 385 701 A2 (UTW TECHNOLOGIES CORP [TW]) 9. November 2011 (2011-11-09) * das ganze Dokument * ----- | 1-11 | |
| A | WO 2012/141707 A1 (HEWLETT PACKARD DEVELOPMENT CO [US]; GORZYNSKI MARK E [US]) 18. Oktober 2012 (2012-10-18) * Zusammenfassung * ----- | 1-11 | |

**RECHERCHIERTE SACHGEBIETE (IPC)**

H04N

Der vorliegende Recherchenbericht wurde für alle Patentansprüche erstellt

| Recherchenort | Abschlußdatum der Recherche | Prüfer |
|---|---|---|
| Berlin | 2. September 2015 | Blais, Denis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 15 00 0585

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-09-2015

| Im Recherchenbericht angeführtes Patentdokument | Datum der Veröffentlichung | Mitglied(er) der Patentfamilie | | Datum der Veröffentlichung |
|---|---|---|---|---|
| US 2013076853    A1 | 28-03-2013 | CA | 2849325 A1 | 28-03-2013 |
|  |  | CN | 104025572 A | 03-09-2014 |
|  |  | US | 2013076853 A1 | 28-03-2013 |
|  |  | WO | 2013043416 A1 | 28-03-2013 |
| US 2009033737    A1 | 05-02-2009 | KEINE |  |  |
| EP 2385701    A2 | 09-11-2011 | EP | 2385701 A2 | 09-11-2011 |
|  |  | JP | 2011239397 A | 24-11-2011 |
|  |  | TW | 201141226 A | 16-11-2011 |
|  |  | US | 2011276902 A1 | 10-11-2011 |
| WO 2012141707    A1 | 18-10-2012 | KEINE |  |  |

Für nähere Einzelheiten zu diesem Anhang : siehe Amtsblatt des Europäischen Patentamts, Nr.12/82